# EUROPÄISCHE PATENTSCHRIFT

(11) **EP 3 385 595 B1**
(45) Veröffentlichungstag und Bekanntmachung des Hinweises auf die Patenterteilung: **04.12.2019**
(21) Anmeldenummer: 18000296.6
(22) Anmeldetag: 26.03.2018
(51) Int. Cl.: F16N 31/00, B65D 3/22, B65D 90/24, B65D 81/26

(54) **VORRICHTUNG ZUM AUFFANGEN VON FLÜSSIGKEITEN**
DEVICE FOR CONTAINING FLUIDS
DISPOSITIF DE RÉCEPTION DE LIQUIDES

(30) Priorität: 03.04.2017 DE 202017001762 U
(43) Veröffentlichungstag der Anmeldung: 10.10.2018
(73) Patentinhaber: Unsöld, Manfred, 71726 Benningen (DE)
(72) Erfinder: Unsöld, Manfred, 71726 Benningen (DE)
(74) Vertreter: Schmid, Barbara

(56) Entgegenhaltungen:
- DE-A1-102015 001 285
- DE-U1-202009 002 057
- US-A- 2 675 165

## Beschreibung

### TECHNISCHES GEBIET

Die Erfindung betrifft eine Vorrichtung, mittels der kleinere Mengen an auslaufenden Flüssigkeiten, insbesondere an Chemikalien wie beispielsweise Motoröl, aufgefangen werden können. Fahrzeuge können - insbesondere wenn sie bereits etwas älter sind - Öl verlieren. Dies kann vor allem bei längeren Standzeiten der Fall sein, beispielsweise beim Parken. An der Stelle, an der das Fahrzeug über Nacht stand, ist dann ein Ölfleck sichtbar. Das auslaufende Öl kann in den Untergrund eindringen und dort zu Folgeschäden führen.

### STAND DER TECHNIK

De 20 2009 002 057 U1 beschreibt eine Vorrichtung zum Auffangen von Flüssigkeiten nach dem Oberbegriff des Anspruchs 1. Grundsätzlich sollte in erster Linie das Auslaufen von Öl oder von anderen Chemikalien verhindert werden. In vielen Fällen ist dies jedoch nicht mit absoluter Sicherheit möglich. In diesen Fällen sollte zumindest verhindert werden, dass die auslaufenden Chemikalien in die Umwelt gelangen können. Dies kann beispielsweise über das Auffangen der Chemikalien erfolgen.

Sofern Fahrzeuge über Nacht Öl verlieren, kann daher beispielsweise eine flache Wanne unter das Fahrzeug geschoben werden. Das Öl tropft in diesem Fall in die Wanne und kann so aufgefangen werden. Das aufgefangene Öl kann anschließend sachgerecht entsorgt werden. Eine solche Wanne eignet sich jedoch nur für einen standortfesten Einsatz, da ein Transport der Wanne aufgrund der Verschmutzung der Wanne schwierig ist. Es kann daher mit einer solchen Wanne zwar dasjenige Öl aufgefangen werden, das das Fahrzeug in der heimischen Garage verliert, wird das Fahrzeug dagegen über Nacht an einem anderen Ort geparkt, tropft das Öl weiterhin auf den Untergrund.

Alternativ dazu sind Ölauffangmatten bekannt, die unter dem Fahrzeug ausgebreitet werden können. Die Ölauffangmatten nehmen das tropfende Öl auf und binden es. Nach einiger Zeit müssen die Ölauffangmatten daher sachgerecht entsorgt werden. Da die Matten bereits nach kurzer Zeit mit Öl verschmutzt sind, gestaltet sich auch hier der Transport schwierig. Die Matten könnten zwar beispielsweise in einer Tüte eingepackt transportiert werden, allerdings wird es oftmals als unangenehm empfunden, die ölverschmutzte Matte anzufassen, so dass ein Transport regelmäßig unterbleibt.

### DARSTELLUNG DER ERFINDUNG

Ausgehend von diesem vorbekannten Stand der Technik liegt der Erfindung die Aufgabe zugrunde, eine verbesserte Vorrichtung zum Auffangen von Flüssigkeiten, insbesondere zum Auffangen von Chemikalien wie beispielsweise Motoröl, anzugeben, die einfach und sicher transportiert werden kann.

Die erfindungsgemäße Vorrichtung ist durch die Merkmale des Hauptanspruchs 1 gegeben. Sinnvolle Weiterbildungen der Erfindung sind Gegenstand von sich an diesen Anspruch anschließenden weiteren Ansprüchen.

Die erfindungsgemäße Vorrichtung besitzt ein wannenartiges Behältnis, das mit einem geeigneten Bindemittel gefüllt ist. Durch das Bindemittel wird die auslaufende Flüssigkeit gebunden, so dass diese nicht mehr in flüssiger Form vorliegt. Insofern ist ein Transport des wannenartigen Behältnisses grundsätzlich möglich, da ein Auslaufen der aufgefangenen Flüssigkeit während des Transports quasi ausgeschlossen ist. Um den Transport und das Aufstellen des wannenartigen Behältnisses weiter zu erleichtern und den Körperkontakt mit dem Bindemittel weitgehend ausschließen zu können, ist das wannenartige Behältnis innerhalb einer Faltschachtel vorhanden, die verschlossen werden kann. Die verschlossene Faltschachtel kann mitsamt Inhalt einfach und bequem beispielsweise im Kofferraum des Fahrzeugs transportiert werden. Bei Bedarf kann die Faltschachtel geöffnet werden und im geöffnetem Zustand unter das Fahrzeug geschoben werden. Im geöffneten Zustand der Faltschachtel liegt das wannenartige Behältnis frei, so dass ein Auffangen von beispielsweise auslaufendem Öl möglich ist.

In einer besonders bevorzugten Ausführungsform kann die verschließbare Faltschachtel ein Bodenteil mit einem rechteckigen Bodenelement, einer Rückwand, einer Vorderwand und zwei Seitenwänden besitzen. Die beiden Seitenwände des Bodenteils können jeweils doppelwandig ausgebildet sein, so dass sich zwischen den beiden Wandteilen einer Seitenwand jeweils ein Schlitz ergibt. An der Rückwand des Bodenteils kann ein Deckelteil mit einem rechteckigen Deckelelement, einer Vorderwand und zwei Seitenwänden einteilig anhängen. An der Vorderwand des Deckelteils kann beidseitig jeweils eine Staublasche anhängen. Diese Staublasche kann beim Verschließen der Faltschachtel jeweils in den Schlitz zwischen den beiden Wandteilen einer Seitenwand des Bodenteils eingeschoben werden.

Die Faltschachtel kann auf diese Weise sicher verschlossen werden, so dass ein Transport der Faltschachtel und damit auch des wannenartigen Behältnisses mit Bindemittel möglich ist. Gleichzeitig ist die Faltschachtel einteilig mit einem Bodenteil und einem Deckelteil ausgebildet, so dass das Deckelteil nicht separat aufbewahrt werden muss, wenn die Vorrichtung bestimmungsgemäß unter dem Fahrzeug aufgestellt wird. Andernfalls könnte das Deckelteil verloren gehen oder versehentlich entsorgt werden. Das einteilige Deckelteil kann dabei auch das Hervorziehen der Vorrichtung unter einem geparkten Fahrzeug erleichtern, da die gesamte Vorrichtung an dem Deckelteil unter dem Fahrzeug gegriffen und hervorgezogen werden kann.

Grundsätzlich könnte das wannenartige Behältnis in einer beliebigen Form ausgestaltet sein. Vorzugsweise kann das wannenartige Behältnis rechteckig ausgebildet sein und ein rechteckiges Bodenteil, eine Vorderwand, eine Rückwand und zwei Seitenwände aufweisen. Ein solches rechteckiges Behältnis kann in das Bodenteil der Faltschachtel so eingesetzt werden, dass das Behältnis kaum in dem Bodenteil der Faltschachtel verrutschen kann. Dies erleichtert den Transport. Darüber hinaus kann dies für eine genaue Positionierung der Vorrichtung beim Auffangen von Flüssigkeiten dienen, da eine Ausrichtung der Faltschachtel gleichzeitig auch eine genaue Ausrichtung des wannenartigen Behältnisses mit sich bringt.

Vorzugsweise können das wannenartige Behältnis und das Bodenteil der Faltschachtel so aufeinander abgestimmt sein, dass die Vorderwand des wannenartigen Behältnisses an der Innenseite der Vorderwand des Bodenteils der Faltschachtel anliegt und die Rückwand des wannenartigen Behältnisses an der Innenseite der Rückwand des Bodenteils der Faltschachtel anliegt. Dies kann das Verrutschen des wannenartigen Behältnisses innerhalb des Bodenteils der Faltschachtel weiter minimieren.

Regelmäßig werden die Seitenwände des Deckelteils im verschlossenen Zustand der Faltschachtel zwischen den Seitenwänden des Bodenteils und den Seitenwänden des wannenartigen Behältnisses platziert. Vorzugsweise können die Seitenwände des Deckelteils dabei einerseits an der Innenseite der Seitenwände des Bodenteils und andererseits an der Außenseite der Seitenwände des wannenartigen Behältnisses anliegen. Dies kann das Verrutschen des wannenartigen Behältnisses innerhalb des Bodenteils der Faltschachtel weiter minimieren. Insbesondere kann durch diese Ausführungsform jedoch verhindert werden, dass das in dem wannenartigen Behältnis vorhandene Bindemittel aus diesem herausrieselt, selbst wenn die Faltschachtel im verschlossenen Zustand nicht absolut gerade transportiert wird.

Um das Einschieben der Seitenwände des Deckelteils zwischen das wannenartige Behältnis und das Bodenteil der Faltschachtel zu erleichtern, können die Seitenwände des Deckelteils an ihrer zur Rückwand des Bodenteils gerichteten Seite eine randseitige Aussparung aufweisen. Diese randseitige Aussparung kann insbesondere schulterförmig ausgebildet sein.

Die erfindungsgemäße Vorrichtung kann in einer bevorzugten Ausführungsform über eine Griffelement verfügen, um die Vorrichtung bequem und mit nur einer Hand transportieren zu können. Ein solches Griffelement kann vorzugsweise an der Vorderwand des Bodenteils der Faltschachtel angeordnet sein. Durch eine in der Vorderwand des Deckelteils der Faltschachtel vorhandene Aussparung kann das Griffelement im verschlossenen Zustand der Faltschachtel zugänglich sein. Gleichzeitig kann durch die Aussparung in der Vorderwand des Deckelteils und das Durchführen des Griffelements durch diese Aussparung verhindert werden, dass sich die Faltschachtel ungewollt öffnet und das Bindemittel aus dem wannenartigen Behältnis herausrieselt.

Vorzugsweise kann die Vorderwand des Deckelteils der Faltschachtel lösbar an der Vorderwand des Bodenteils der Faltschachtel befestigt werden. Dies kann beispielsweise durch einen Klettverschluss oder durch einen Magnetverschluss erfolgen. Auf diese Weise kann ein unbeabsichtigtes Öffnen der Faltschachtel verhindert werden, was gerade während des Transports der Faltschachtel wichtig ist.

Vorzugsweise kann die Faltschachtel und/oder das wannenartige Behältnis aus Karton oder aus kartonähnlichem Material bestehen oder zumindest solches Material enthalten. Derartiges Material kann problemlos recycelt werden; gleichzeitig ist es ausreichend stabil, um den Inhalt zu schützen. Insbesondere die Faltschachtel kann beliebig bedruckt oder anderweitig graphisch ausgestaltet sein. Die Faltschachtel kann auf diese Weise beispielsweise als Werbeträger dienen.

Die erfindungsgemäße Vorrichtung könnte beispielsweise auch als mobile Katzentoilette dienen. In diesem Fall wäre als geeignetes Bindemittel ein Katzenstreu vorzusehen.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht einer ersten Ausführungsform der erfindungsgemäßen Vorrichtung mit geschlossener Faltschachtel,
- Fig. 2: eine perspektivische Ansicht der Vorrichtung gemäß Fig. 1 mit geöffnetem Deckelteil der Faltschachtel und
- Fig. 3: eine perspektivische Ansicht einer zweiten Ausführungsform der erfindungsgemäßen Vorrichtung mit geschlossener Faltschachtel.

### WEGE ZUM AUSFÜHREN DER ERFINDUNG

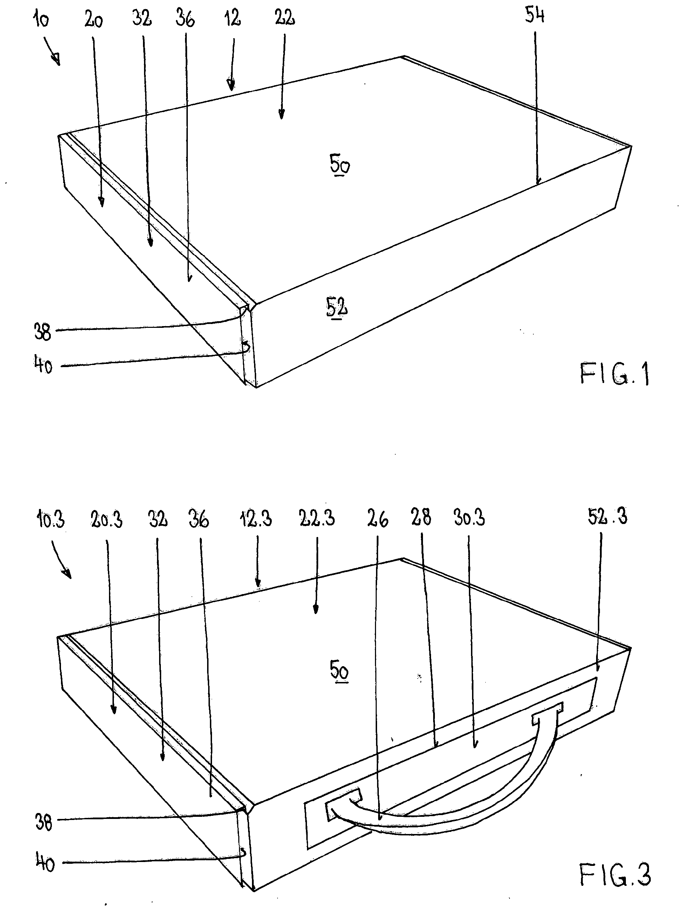

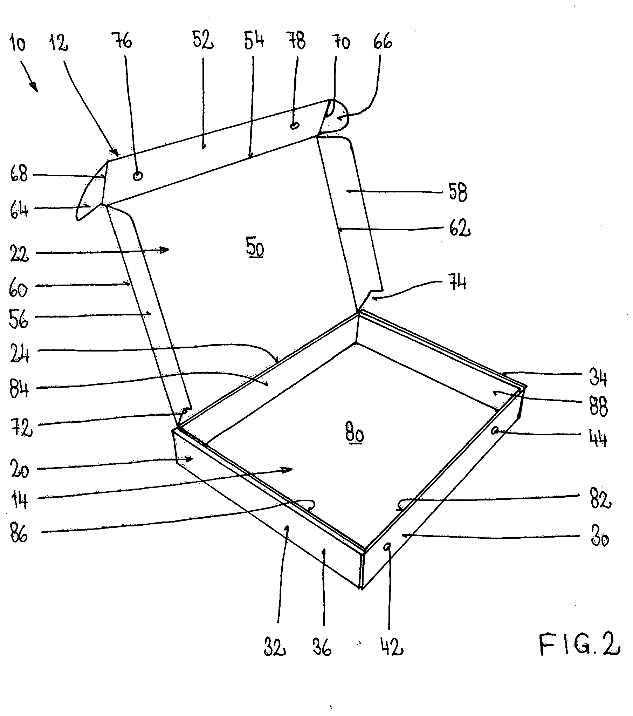

Die erfindungsgemäße Vorrichtung 10 ist in Fig. 1 und 2 in einer ersten Ausführungsform dargestellt. Die Vorrichtung 10 besitzt eine Faltschachtel 12, die in Fig. 1 in geschlossenem Zustand dargestellt ist. Innerhalb der Faltschachtel 12 befindet sich ein wannenartiges Behältnis 14 (siehe Fig. 2). In dem wannenartigen Behältnis 14 kann ein hier nicht dargestelltes Bindemittel aufbewahrt und transportiert werden.

Die Faltschachtel 12 besitzt ein Bodenteil 20 und ein Deckelteil 22, die im vorliegenden Beispielsfall einteilig miteinander verbunden sind. Die Faltschachtel 12 ist somit als Klappschachtel ausgebildet. Das Bodenteil 20 der Faltschachtel besitzt ein rechteckiges Bodenelement. An diesem Bodenelement hängen eine Vorderwand 30, eine Rückwand und zwei Seitenwände 32, 34 einteilig an. Die beiden Seitenwände 32, 34 besitzen jeweils zwei Wandteile 36, 38 und sind somit doppelwandig ausgebildet. Zwischen den Wandteilen 36, 38 bildet sich ein Schlitz 40.

An der Rückwand des Bodenteils 20 hängt das Deckelteil 22 über eine Schwächungslinie 24 einteilig an. Das Deckelteil 22 besitzt ein rechteckiges Deckelelement 50, das über die Schwächungslinie 24 an der Rückwand des Bodenteils 20 anhängt. An diesem Deckelelement 50 hängt eine Vorderwand 52 über eine Schwächungslinie 54 einteilig an. Die Schwächungslinie 54 und die Schwächungslinie 24 verlaufen parallel zueinander. An den freien Kanten des Deckelelements 50 hängt jeweils eine Seitenwand 56, 58 über jeweils eine Schwächungslinie 60, 62 einteilig an. An den beiden seitlichen Kanten der Vorderwand 52 des Deckelteils 22 hängt jeweils eine Staublasche 64, 66 über eine Schwächungslinie 68, 70 einteilig an. Im geschlossenen Zustand der Faltschachtel 12 werden diese Staublaschen 64, 66 in die Schlitze 40 zwischen den beiden Wandteilen 36, 38 einer Seitenwand 32, 34 eingeschoben. Auf diese Weise kann die Faltschachtel 12 sicher verschlossen werden. Die beiden Seitenwände 56, 58 des Deckelteils 22 liegen im geschlossenen Zustand der Faltschachtel 12 an der Innenseite der Seitenwände 32, 34 des Bodenteils 20 an.

Im Bodenteil 20 der Faltschachtel 12 befindet sich ein wannenartiges Behältnis 14. Das wannenartige Behältnis 14 besitzt einen rechteckigen Boden 80, dessen Grundfläche etwas kleiner ist als die Grundfläche des Bodenteils 20 der Faltschachtel 12. An dem Bodenteil 80 hängen eine Vorderwand 82, eine Rückwand 84 und zwei Seitenwände 86, 88 einteilig an. Um ein Verrutschen des wannenartigen Behältnisses 14 innerhalb des Bodenteils 20 der Faltschachtel 12 zu verhindern, liegt die Vorderwand 82 des wannenartigen Behältnisses 14 an der Innenseite der Vorderwand 30 des Bodenteils 20 der Faltschachtel 12 an. Die Rückwand 84 des wannenartigen Behältnisses 14 liegt an der Innenseite der Rückwand des Bodenteils 20 der Faltschachtel 14 an. Zwischen den Seitenwänden 86, 88 des wannenartigen Behältnisses 14 und den jeweiligen Seitenwänden 32, 34 des Bodenteils 20 der Faltschachtel 14 ist ein geringer Abstand vorgesehen. Auf diese Weise können die Seitenwände 56, 58 des Deckelteils 22 der Faltschachtel 12 zwischen die Seitenwände 86, 88 des wannenartigen Behältnisses 14 und die entsprechenden Seitenwände 32, 34 des Bodenteils 20 der Faltschachtel 12 gesteckt werden, wenn die Faltschachtel 12 geschlossen wird. Dies verhindert ein Verrutschen des wannenartigen Behältnisses 14 innerhalb der Faltschachtel 12 und sorgt gleichzeitig dazu, dass auch beim Transport der Faltschachtel 12 kein innerhalb des wannenartigen Behältnisses 14 befindliches Bindemittel aus dem Behältnis 14 herausrieseln kann.

Um das Einschieben der beiden Seitenwände 56, 58 des Deckelteils 22 zwischen die Seitenwände 32, 34 des Bodenteils 20 und die Seitenwände 86, 88 des wannenartigen Behältnisses 14 zu erleichtern, besitzen die Seitenwände 56, 58 des Deckelteils 22 an ihrer der Rückwand zugewandten Kante jeweils eine randseitige Aussparung 72, 74. Diese randseitige Aussparung 72, 74 kann dafür sorgen, dass die Seitenwände 56, 58 rasch und sicher zwischen das wannenartige Behältnis 14 und die Seitenwände 32, 34 des Bodenteils 20 geschoben werden können. Im vorliegenden Beispielsfall sind die randseitigen Aussparungen 72, 74 jeweils schulterförmig ausgebildet.

Um zu verhindern, dass sich das Deckelteil 22 beispielsweise während des Transports der Faltschachtel 12 unbeabsichtigt öffnet, sind an der Innenseite der Vorderwand 52 des Deckelteils 22 im vorliegenden Beispielsfall zwei Klettverschlüsse 76, 78 angebracht. An der Außenseite der Vorderwand 30 des Bodenteils befindet sich im vorliegenden Beispielsfall ebenfalls zwei Klettverschlüsse 42, 44. Die Klettverschlüsse 76, 78 des Deckelteils 22 kommen beim Schließen der Faltschachtel 12 auf den Klettverschlüssen 42, 44 des Bodenteils zu Liegen, so dass ein sicherer Verschluss der Faltschachtel 12 möglich ist.

Im Gegensatz zu dem hier dargestellten Ausführungsbeispiel könnten die Klettverschlüsse, 42, 44, 76, 78 auch durch andere Verschlusselemente, beispielsweise durch einen Magnetverschluss, ersetzt werden. Es wäre auch möglich, auf die Verschlusselemente zu verzichten.

In Fig. 3 ist eine zweite Ausführungsform der erfindungsgemäßen Vorrichtung 10.3 dargestellt. Die Vorrichtung 10.3 besitzt eine Faltschachtel 12.3, die in Fig. 3 geschlossen dargestellt ist. Die Faltschachtel 12.3 unterscheidet sich von der Faltschachtel 12 gemäß Fig. 1 und 2 durch das Griffelement 26. Das Griffelement 26 ist an der Vorderwand 30.3 des Bodenteils 20 befestigt. Die Vorderwand 52.3 des Deckelteils 22.3 besitzt daher eine entsprechende Aussparung 28, durch die das Griffelement 26 im geschlossenen Zustand der Faltschachtel 12.3 zugänglich ist.

## Patentansprüche

1. Vorrichtung (10, 10.3) zum Auffangen von Flüssigkeiten, insbesondere zum Auffangen von Chemikalien wie beispielsweise Motoröl,
- mit einem wannenartigen Behältnis (14),
- mit einem Bindemittel, das innerhalb des wannenartigen Behältnisses (14) vorhanden ist,
- **dadurch gekennzeichnet, dass**
- das Behältnis (14) innerhalb einer verschließbaren Faltschachtel (12, 12.3) vorhanden ist.

2. Vorrichtung nach Anspruch 1,
- **dadurch gekennzeichnet, dass**
- die verschließbare Faltschachtel (12, 12.3) ein Bodenteil (20, 20.3) mit einem rechteckigen Bodenelement, einer Rückwand, einer Vorderwand (30, 30.3) und zwei Seitenwänden (32, 34) besitzt,
- die beiden Seitenwände (32, 34) des Bodenteils (20, 20.3) jeweils doppelwandig ausgebildet sind, so dass sich zwischen den beiden Wandteilen (36, 38) einer Seitenwand (32, 34) jeweils ein Schlitz (40) ergibt,
- an der Rückwand des Bodenteils (20, 20.3) ein Deckelteil (22, 22.3) einteilig anhängt,
- das Deckelteil (22, 22.3) ein rechteckiges Deckelelement (50), eine Vorderwand (52,52.3) und zwei Seitenwände (56, 58) besitzt,
- die Vorderwand (52, 52.3) des Deckelteils (22, 22.3) beidseitig jeweils eine Staublasche (64, 66) aufweist, die beim Verschließen der Faltschachtel (12, 12.3) in den Schlitz (40) zwischen den beiden Wandteilen (36, 38) der Seitenwände (32, 34) des Bodenteils (20, 20.3) einschiebbar sind.

3. Vorrichtung nach Anspruch 2,
- **dadurch gekennzeichnet, dass**
- das wannenartige Behältnis (14) rechteckig ausgebildet ist,
- das wannenartige Behältnis (14) ein rechteckiges Bodenteil (80), eine Vorderwand (82), eine Rückwand (84) und zwei Seitenwände (86, 88) aufweist.

4. Vorrichtung nach Anspruch 3,
- **dadurch gekennzeichnet, dass**
- die Vorderwand (82) des wannenartigen Behältnisses (14) an der Innenseite der Vorderwand (30, 30.3) des Bodenteils (20, 20.3) der Faltschachtel (12, 12.3) anliegt,
- die Rückwand (84)des wannenartigen Behältnisses (14) an der Innenseite der Rückwand des Bodenteils (20, 20.3) der Faltschachtel (12, 12.3) anliegt.

5. Vorrichtung nach Anspruch 3 oder 4,
- **dadurch gekennzeichnet, dass**
- die Seitenwände (56, 58) des Deckelteils (22, 22.3) im verschlossenen Zustand der Faltschachtel (12, 12.3) einerseits an der Innenseite der Seitenwände (32, 34) des Bodenteils (20, 20.3) und andererseits an der Außenseite der Seitenwände (86, 88) des wannenartigen Behältnisses (14) anliegen.

6. Vorrichtung nach Anspruch 5,
- **dadurch gekennzeichnet, dass**
- die Seitenwände (56, 58) des Deckelteils (22, 22.3) an ihrer zur Rückwand des Bodenteils (20, 20.3) gerichteten Seite eine randseitige Aussparung (72, 74) aufweisen.

7. Vorrichtung nach Anspruch 6,
- **dadurch gekennzeichnet, dass**
- die randseitige Aussparung (72, 74) schulterförmig ausgebildet ist.

8. Vorrichtung nach einem der vorstehenden Ansprüche,
- **dadurch gekennzeichnet, dass**
- an der Faltschachtel (12.3) ein Griffelement (26) vorhanden ist.

9. Vorrichtung nach Anspruch 8,
- **dadurch gekennzeichnet, dass**
- das Griffelement (26) an der Vorderwand (30.3) des Bodenteils (20.3) der Faltschachtel (12.3) angeordnet ist,
- die Vorderwand (52.3) des Deckelteils (22.3) der Faltschachtel (12.3) eine Aussparung (28) aufweist, durch die das Griffelement (26) zugänglich ist.

10. Vorrichtung nach einem der vorstehenden Ansprüche,
- **dadurch gekennzeichnet, dass**
- die Vorderwand (52, 52.3) des Deckelteils (22, 22.3) der Faltschachtel (12, 12.3) lösbar, insbesondere mittels zumindest eines Klettverschlusses (42, 44, 76, 78) oder Magnetverschlusses, an der Vorderwand (30, 30.3) des Bodenteils (20, 20.3) der Faltschachtel (12, 12.3) befestigbar ist.

11. Vorrichtung nach einem der vorstehenden Ansprüche,
- **dadurch gekennzeichnet, dass**
- das Behältnis (14) und/oder die Faltschachtel (12, 12.3) aus Karton oder aus kartonähnlichem Material besteht.

## Claims

1. Apparatus (10, 10.3) for collecting liquids, in particular for collecting chemicals such as, for example, engine oil,
- having a tray-like container (14),
- having a binding agent, which is present within the tray-like container (14),
- **characterized in that**
- the container (14) is present within a closable folding box (12, 12.3).

2. Apparatus according to Claim 1,
- **characterized in that**
- the closable folding box (12, 12.3) has a base part (20, 20.3) having a rectangular base element, a rear wall, a front wall (30, 30.3) and two side walls (32, 34),
- the two side walls (32, 34) of the base part (20, 20.3) are each of double-walled design, and this therefore results in a slot (40) being formed between the two wall parts (36, 38) of a side wall (32, 34),
- a cover part (22, 22.3) adjoins the rear wall of the base part (20, 20.3) in one piece,
- the cover part (22, 22.3) has a rectangular cover element (50), a front wall (52, 52.3) and two side walls (56, 58),
- the front wall (52, 52.3) of the cover part (22, 22.3) has a respective dust flap (64, 66) on either side, it being possible for said dust flaps to be pushed into the slot (40) between the two wall parts (36, 38) of the side walls (32, 34) of the base part (20, 20.3) when the folding box (12, 12.3) is being closed.

3. Apparatus according to Claim 2,
- **characterized in that**
- the tray-like container (14) is of rectangular design,
- the tray-like container (14) has a rectangular base part (80), a front wall (82), a rear wall (84) and two side walls (86, 88).

4. Apparatus according to Claim 3,
- **characterized in that**
- the front wall (82) of the tray-like container (14) butts against the inner side of the front wall (30, 30.3) of the base part (20, 20.3) of the folding box (12, 12.3),
- the rear wall (84) of the tray-like container (14) butts against the inner side of the rear wall of the base part (20, 20.3) of the folding box (12, 12.3).

5. Apparatus according to Claim 3 or 4,
- **characterized in that**
- in the closed state of the folding box (12, 12.3), the side walls (56, 58) of the cover part (22, 22.3) butt, on the one hand, against the inner side of the side walls (32, 34) of the base part (20, 20.3) and, on the other hand, against the outer side of the side walls (86, 88) of the tray-like container (14).

6. Apparatus according to Claim 5,
- **characterized in that**
- on their side which is directed towards the rear wall of the base part (20, 20.3), the side walls (56, 58) of the cover part (22, 22.3) have a peripheral cutout (72, 74).

7. Apparatus according to Claim 6,
- **characterized in that**
- the peripheral cutout (72, 74) is designed in the form of a shoulder.

8. Apparatus according to one of the preceding claims,
- **characterized in that**
- a handle element (26) is present on the folding box (12.3).

9. Apparatus according to Claim 8,
- **characterized in that**
- the handle element (26) is arranged on the front wall (30.3) of the base part (20.3) of the folding box (12.3),
- the front wall (52.3) of the cover part (22.3) of the folding box (12.3) has a cutout (28), through which the handle element (26) is accessible.

10. Apparatus according to one of the preceding claims,
- **characterized in that**
- the front wall (52, 52.3) of the cover part (22, 22.3) of the folding box (12, 12.3) can be fastened on the front wall (30, 30.3) of the base part (20, 20.3) of the folding box (12, 12.3) in a releasable manner, in particular by means of at least one hook-and-loop fastener (42, 44, 76, 78) or magnetic closure.

11. Apparatus according to one of the preceding claims,
- **characterized in that**
- the container (14) and/or the folding box (12, 12.3) consist/consists of cardboard or of cardboard-like material.

## Revendications

1. Dispositif (10, 10.3) de collecte de liquides, en particulier de collecte de produits chimiques, comme par exemple de l'huile de moteur, ledit dispositif comprenant :
- un récipient (14) de type cuvette,
- un liant qui est présent dans le récipient (14) de type cuvette,
**caractérisé en ce que**
- le récipient (14) se trouve dans une boîte pliable (12, 12.3) pouvant être fermée.

2. Dispositif selon la revendication 1,
**caractérisé en ce que**
- la boîte pliable (12, 12.3) pouvant être fermée comporte une partie fond (20, 20.3) pourvue d'un élément de fond rectangulaire, une paroi arrière, une paroi avant (30, 30.3) et deux parois latérales (32, 34),
- les deux parois latérales (32, 34) de la partie fond (20, 20.3) sont conçues chacune à double paroi de sorte que, entre les deux parties de paroi (36, 38) d'une paroi latérale (32, 34), une fente (40) est formée,
- une partie couvercle (22, 22.3) est attachée d'une seule pièce à la paroi arrière de la partie fond (20, 20.3),
- la partie couvercle (22, 22.3) comporte un élément de couvercle rectangulaire (50), une paroi avant (52, 52.3) et deux parois latérales (56, 58),
- la paroi avant (52, 52.3) de la partie couvercle (22, 22.3) comporte des deux côtés un volet anti-poussière (64, 66) qui, lors de la fermeture de la boîte pliante (12, 12.3), peut être insérée dans la fente (40) entre les deux parties de paroi (36, 38) des parois latérales (32, 34) de la partie fond (20, 20.3).

3. Dispositif selon la revendication 2,
**caractérisé en ce que**
- le récipient (14) de type cuvette est de forme rectangulaire,
- le récipient (14) de type cuvette comporte une partie fond rectangulaire (80), une paroi avant (82), une paroi arrière (84) et deux parois latérales (86, 88) .

4. Dispositif selon la revendication 3,
**caractérisé en ce que**
- la paroi avant (82) du récipient (14) de type cuvette vient en appui sur le côté intérieur de la paroi avant (30, 30.3) de la partie fond (20, 20.3) de la boîte pliable (12, 12.3),
- la paroi arrière (84) du récipient (14) de type cuvette vient en appui sur le côté intérieur de la paroi arrière de la partie fond (20, 20.3) de la boîte pliable (12, 12.3).

5. Dispositif selon la revendication 3 ou 4, **caractérisé en ce que**
- les parois latérales (56, 58) de la partie couvercle (22, 22.3) viennent en appui, lorsque la boîte pliable (12, 12.3) est fermée, d'une part sur le côté intérieur des parois latérales (32, 34) de la partie fond (20, 20.3) et d'autre part sur le côté extérieur des parois latérales (86, 88) du récipient (14) de type cuvette.

6. Dispositif selon la revendication 5,
**caractérisé en ce que**
- les parois latérales (56, 58) de la partie couvercle (22, 22.3) comportent sur leur côté dirigé vers la paroi arrière de la partie fond (20, 20.3), un évidement côté bord (72, 74).

7. Dispositif selon la revendication 6,
**caractérisé en ce que**
- l'évidement côté bord (72, 74) est en forme d'épaulement.

8. Dispositif selon l'une des revendications précédentes,
**caractérisé en ce que**
- un élément de préhension (26) est présent au niveau de la boîte pliable (12.3).

9. Dispositif selon la revendication 8,
**caractérisé en ce que**
- l'élément de préhension (26) est disposé au niveau de la paroi avant (30.3) de la partie fond (20.3) de la boîte pliable (12.3),
- la paroi avant (52.3) de la partie couvercle (22.3) de la boîte pliable (12.3) comporte un évidement (28) par lequel l'élément de préhension (26) est accessible.

10. Dispositif selon l'une des revendications précédentes,
**caractérisé en ce que**
- la paroi avant (52, 52.3) de la partie couvercle (22, 22.3) de la boîte pliable (12, 12.3) peut être fixée de façon amovible, en particulier à l'aide d'au moins une fermeture auto-agrippante (42, 44, 76, 78) ou d'une fermeture magnétique, à la paroi avant (30, 30.3) de la partie fond (20, 20.3) de la boîte pliable (12, 12.3).

11. Dispositif selon l'une des revendications précédentes,
**caractérisé en ce que**
- le récipient (14) et/ou la boîte pliable (12, 12.3) est en carton ou en matériau analogue à du carton.
